# FASCICULE DE BREVET EUROPEEN

(11) **EP 2 016 875 B1**
(45) Date de publication et mention de la délivrance du brevet: **06.10.2010**
(21) Numéro de dépôt: 08447038.4
(22) Date de dépôt: 22.07.2008
(51) Int. Cl.: A47J 27/08

(54) **Autocuiseur pourvu d'un écran**
Schnellkochtopf mit Abdeckungsschirm
Pressure cooker equipped with a screen

(30) Priorité: 20.07.2007 FR 0705264
(43) Date de publication de la demande: 21.01.2009
(73) Titulaire: SEB S.A., 69132 Ecully Cedex (FR)
(72) Inventeur: Rhetat, Eric, Jacques, 21000 Dijon (FR); Cartigny, Michel, Pierre, 21310 Mirebeau sur Beze (FR)
(74) Mandataire: Martin, Didier Roland Valéry

(56) Documents cités:
- FR-A- 2 865 621
- JP-A- 11 137 418

## Description

La présente invention se rapporte au domaine technique général des ustensiles de cuisine du type récipients de cuisson, et en particulier au secteur des autocuiseurs, c'est-à-dire des marmites de cuisson sous pression destinées à assurer la cuisson sous pression de vapeur des aliments contenus en leur sein.

La présente invention concerne plus particulièrement un autocuiseur domestique comprenant au moins :
- une cuve qui comprend elle-même une paroi,
- un couvercle destiné à être rapporté sur la cuve pour former avec cette dernière une enceinte de cuisson,
- et un moyen de verrouillage / déverrouillage du couvercle sur la cuve.

Les autocuiseurs domestiques sont bien connus. Ils se composent habituellement d'une cuve métallique destinée à accueillir les aliments et d'un couvercle, métallique lui aussi, destiné à être rapporté et verrouillé sur la cuve pour former avec cette dernière une enceinte de cuisson étanche.

Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

Un autocuiseur représentant l'art antérieur est décrit par exemple dans FR-2 865 621 A.

Il existe différents types de moyens de verrouillage / déverrouillage du couvercle sur la cuve, tel que notamment les systèmes à étriers, à baïonnettes ou à mâchoires, pour n'en citer que certains parmi les plus répandus.

Ces moyens de verrouillage / déverrouillage connus assurent généralement parfaitement, du point de vue de la sécurité en particulier, leur fonction d'assujettissement du couvercle à la cuve de manière à permettre à l'enceinte de cuisson ainsi créée de monter en pression de façon fiable et sûre.

Ces moyens de verrouillage / déverrouillage connus présentent toutefois un aspect visuel très technique qui est de nature à effrayer de nombreux utilisateurs potentiels. Ces derniers, en particulier lorsqu'ils n'ont pas l'habitude de la cuisson sous pression, peuvent craindre en effet de ne pas savoir utiliser un appareil d'apparence aussi technique, qui leur paraît très éloigné des ustensiles traditionnels de cuisson, du genre casserole, dont ils ont l'habitude. La présence des moyens de verrouillage / déverrouillage est également de nature à rappeler, même de façon inconsciente, à ces utilisateurs potentiels, que les autocuiseurs fonctionnent à des niveaux élevés de pression et de température. Cela peut renforcer l'appréhension desdits utilisateurs et amener une certaine réticence de leur part à utiliser un autocuiseur, qui s'apparente plus pour eux à une sorte de machine complexe et dangereuse qu'à un ustensile culinaire domestique.

En définitive, les autocuiseurs connus présentent un caractère anxiogène, c'est-à-dire qu'ils génèrent à l'endroit de nombreux utilisateurs ou utilisateurs potentiels une anxiété diffuse. Un tel sentiment est certes généralement infondé, puisque ces appareils sont généralement d'utilisation très facile et sûre. Ce sentiment de crainte est pourtant bien présent et il est susceptible d'empêcher de nombreuses personnes d'utiliser les autocuiseurs malgré tout le bénéfice, en matière de rapidité et de qualité de cuisson notamment, que ces derniers procurent.

Les objets assignés à l'invention visent en conséquence à porter remède aux différents inconvénients énumérés précédemment et à proposer un nouvel autocuiseur domestique dont la construction n'est pas anxiogène pour l'utilisateur.

Un autre objet de l'invention vise à proposer un nouvel autocuiseur domestique de construction particulièrement simple.

Un autre objet de l'invention vise à proposer un nouvel autocuiseur domestique de construction particulièrement compacte et bon marché.

Un autre objet de l'invention vise à proposer un nouvel autocuiseur domestique dont la fabrication est très simple, rapide et bon marché.

Un autre objet de l'invention vise à proposer un nouvel autocuiseur domestique dont la conception met en oeuvre un nombre très limité de pièces différentes.

Un autre objet de l'invention vise à proposer un nouvel autocuiseur domestique dont l'aspect général est très proche de celui d'une casserole classique.

Les objets assignés à l'invention sont atteints à l'aide d'un autocuiseur domestique comprenant au moins :
- une cuve qui comprend elle-même une paroi,
- un couvercle destiné à être rapporté sur la cuve pour former avec cette dernière une enceinte de cuisson,
- un moyen de verrouillage / déverrouillage du couvercle sur la cuve, ledit autocuiseur étant caractérisé en ce que le moyen de verrouillage /déverrouillage comprend d'une part au moins une ouverture de verrouillage ménagée à travers la paroi de la cuve et d'autre part un pêne monté mobile sur le couvercle entre une position de verrouillage du couvercle dans laquelle le pêne est engagé dans l'ouverture de verrouillage et une position de déverrouillage du couvercle dans laquelle le pêne est dégagé de l'ouverture de verrouillage, ledit autocuiseur comprenant en outre un écran fixé sur la cuve pour masquer ladite ouverture de verrouillage de façon que cette dernière ne soit sensiblement pas visible de l'extérieur de l'enceinte de cuisson.

D'autres particularités et avantages de l'invention apparaîtront et ressortiront plus en détails à la lecture de la description faite ci-après, en référence aux dessins annexés, donnés à titre d'exemple illustratif et non limitatif dans lesquels :

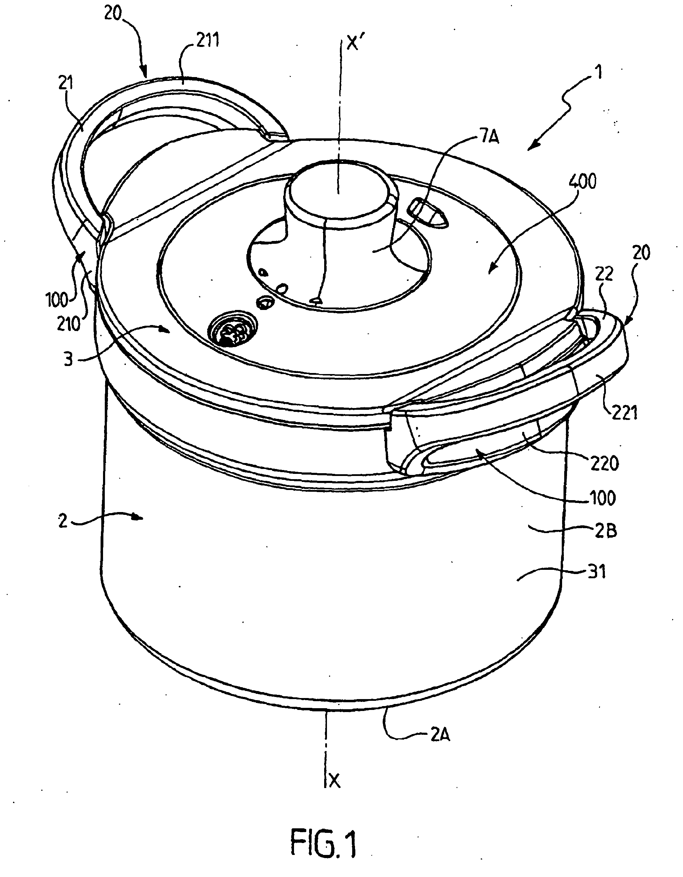

- La figure 1 illustre, selon une vue générale en perspective, un autocuiseur domestique conforme à l'invention.

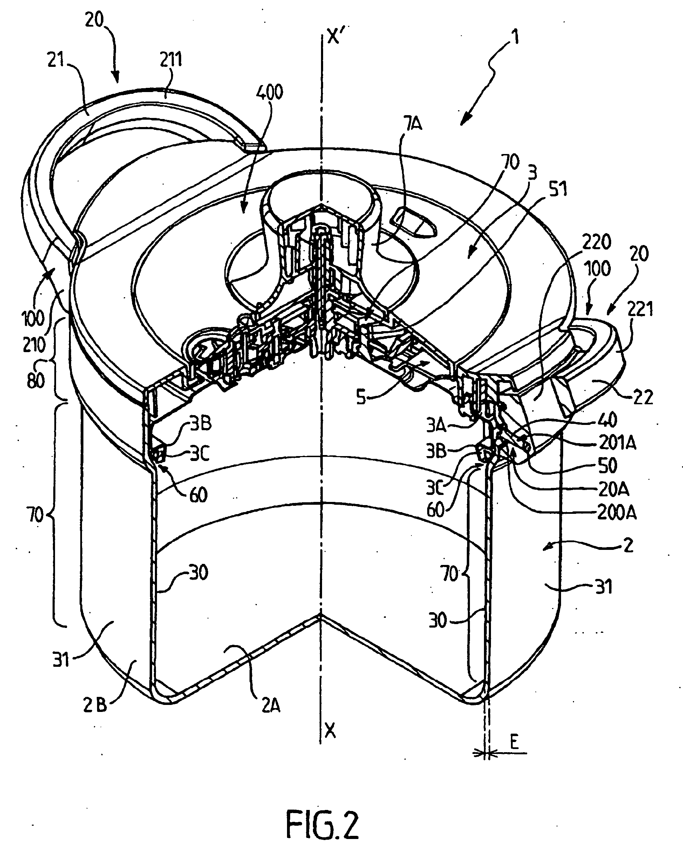

- La figure 2 illustre, selon une vue générale en perspective partiellement coupée, selon deux plans de coupe sensiblement perpendiculaires, l'autocuiseur de la figure 1.
- La figure 3 illustre, selon une vue de dessus partiellement écorchée et coupée, l'autocuiseur des figures 1 et 2 avec le couvercle verrouillé sur la cuve.
- La figure 4 illustre, selon une vue de dessus partiellement écorchée et coupée, l'autocuiseur des figures 1 à 3 avec son couvercle déverrouillé sur la cuve.
- La figure 5 illustre, selon une vue latérale en coupe, la cuve de l'autocuiseur illustré aux figures 1 à 4.
- La figure 6 illustre, selon une vue en coupe selon la ligne A-A de la figure 5, un détail agrandi de réalisation de la cuve illustrée à la figure 5.

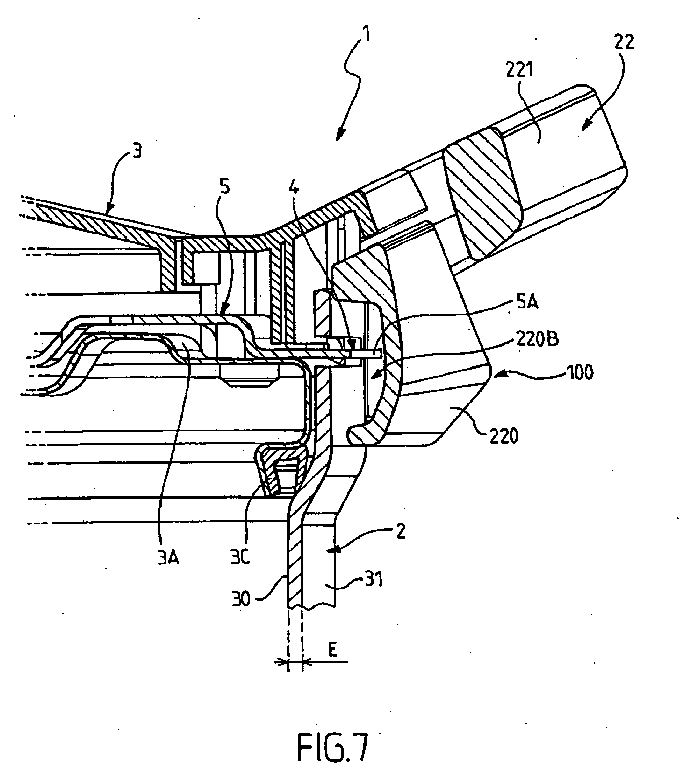

- La figure 7 illustre, selon une vue en perspective coupée, un détail de réalisation de d'autocuiseur illustré aux figures 1 à 4.

L'autocuiseur 1 conforme à l'invention est destiné à assurer la cuisson de différents aliments sous pression dans un contexte domestique. Il forme donc à ce titre un autocuiseur domestique.

L'autocuiseur 1 conforme à l'invention est donc un ustensile de cuisine présentant un caractère portatif (c'est-à-dire déplaçable manuellement) et indépendant.

Avantageusement, l'autocuiseur 1 conforme à l'invention constitue une marmite passive thermiquement, conçue pour monter en pression sous l'effet d'une source de chauffe qui lui est extérieure, telle qu'une plaque de cuisson.

De façon préférentielle, l'autocuiseur 1 conforme à l'invention comprend une cuve 2 formant récipient de cuisson et présentant avantageusement sensiblement une symétrie de révolution selon un axe X-X'. Par la suite, l'adjectif « *axial* » se référera à la direction de cet axe de symétrie X-X', direction qui s'apparente à la direction verticale lorsque l'appareil est en fonctionnement normal. La cuve 2 est par exemple et de manière classique fabriquée par emboutissage d'un flan en matériau métallique tel que l'aluminium ou l'acier inoxydable.

La cuve 2 comprend ainsi une paroi, laquelle paroi comprend elle-même, dans l'exemple de réalisation illustré :
- un fond 2A, qui présente par exemple une forme discoïde,
- et une paroi latérale 2B, qui s'élève à partir et à la périphérie dudit fond 2A ; ladite paroi latérale 2B présente une forme sensiblement annulaire et délimite une ouverture supérieure 2C permettant d'introduire des aliments dans la cuve 2, en vue de les y cuire ; ladite paroi latérale 2B présente également une face interne 30 située en regard de l'intérieur de la cuve 2 et une face externe 31 opposée.

L'autocuiseur 1 conforme à l'invention comprend également un couvercle 3 destiné à être rapporté sur ladite cuve 2 pour former avec cette dernière une enceinte de cuisson de préférence sensiblement étanche, c'est-à-dire suffisamment hermétique pour permettre une montée en pression en son sein.

Ainsi, l'enceinte formée par la réunion de la cuve 2 et du couvercle 3 est conçue pour permettre une augmentation significative de pression en son sein, de sorte que pendant la cuisson, la pression régnant dans l'enceinte peut être nettement supérieure à la pression atmosphérique, et par exemple excéder ladite pression atmosphérique d'une valeur supérieure ou égale à 10 kPa, et de préférence supérieure ou égale à 20 kPa. Il est également tout à fait envisageable, afin de permettre une cuisson très rapide et efficace, que l'enceinte soit conçue pour que la pression régnant en son sein puisse excéder la pression atmosphérique d'une valeur sensiblement comprise entre 40 et 110 kPa, et de préférence sensiblement comprise entre 50 et 100 kPa.

Le couvercle 3 affecte préférentiellement une forme générale discoïde, complémentaire de la forme de la cuve 2. Avantageusement, le couvercle 3 peut être verrouillé ou déverrouillé à volonté sur la cuve 2, le verrouillage du couvercle 3 permettant à l'enceinte de monter en pression sans échappement du couvercle 3 sous l'effet de la pression.

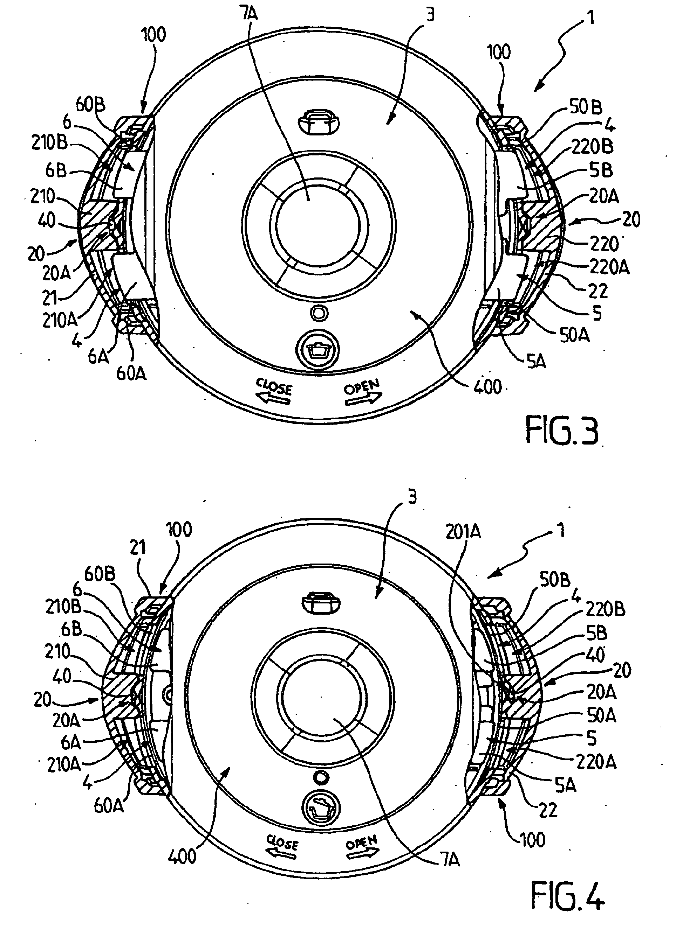

A cette fin, l'autocuiseur 1 comprend préférentiellement un moyen de verrouillage / déverrouillage 4 du couvercle 3 sur la cuve 2. Le moyen de verrouillage / déverrouillage 4 est avantageusement conçu pour évoluer entre une configuration de verrouillage du couvercle 3 relativement à la cuve 2 (illustrée notamment à la figure 3) dans laquelle le couvercle 3 est solidarisé à la cuve 2, et une configuration de déverrouillage du couvercle 3 relativement à la cuve 2 (illustrée notamment à la figure 4), dans laquelle le couvercle 3 peut être librement séparé de la cuve 2.

Tel que cela est illustré aux figures, le moyen de verrouillage / déverrouillage 4 comprend au moins une ouverture de verrouillage 50A, 50B, 60A, 60B ménagée à travers la paroi de la cuve 2, c'est-à-dire traversant la paroi de la cuve sur toute son épaisseur E. Dans l'exemple illustré aux figures, l'autocuiseur 1 comprend quatre ouvertures de verrouillage 50A, 50B, 60A, 60B disposées de manière préférentielle dans la partie supérieure 80 de la paroi 2B de la cuve 2, c'est-à-dire vers l'ouverture supérieure 2C de la cuve 2. Tel que cela est illustré aux figures, lesdites ouvertures de verrouillage 50A, 50B, 60A, 60B sont préférentiellement regroupées par paires, lesdites paires étant diamétralement opposées.

Conformément à l'invention, le moyen de verrouillage / déverrouillage 4 comprend en outre au moins un pêne 5A, 5B, 6A, 6B monté mobile sur le couvercle 3 entre d'une part une position de verrouillage du couvercle 3 (illustrée en particulier à la figure 3) dans laquelle le pêne 5A, 5B, 6A, 6B est engagé dans l'ouverture de verrouillage correspondante 50A, 50B, 60A, 60B pour interdire toute séparation du couvercle 3 de la cuve 2, à la manière d'un système de serrure pêne/gâche, et d'autre part une position de déverrouillage du couvercle 3 (illustrée à la figure 4), dans laquelle le pêne 5A, 5B, 6A, 6B est dégagé de l'ouverture de verrouillage correspondante 50A, 50B, 60A, 60B pour permettre le libre mouvement du couvercle 3 relativement à la cuve, et en particulier la séparation du couvercle 3 de la cuve 2 par l'utilisateur.

De préférence, tel qu'illustré aux figures, l'autocuiseur 1 comprend un nombre de pênes 5A, 5B, 6A, 6B correspondant au nombre d'ouvertures de verrouillage 50A, 50B, 60A, 60B, c'est-à-dire qu'il comprend en l'occurrence quatre pênes 5A, 5B, 6A, 6B destinés à coopérer respectivement avec les ouvertures 50A, 50B, 60A, 60B. De préférence, les pênes 5A, 5B, 6A, 6B sont montés mobiles en translation sur le couvercle 3 entre une position rétractée (illustrée à la figure 4) dans laquelle les pênes 5A, 5B, 6A, 6B sont rentrés à l'intérieur du couvercle 3 de manière à ne pas dépasser latéralement de ce dernier, et d'autre part une position déployée (illustrée à la figure 3) dans laquelle chaque pêne 5A, 5B, 6A, 6B pénètre dans l'ouverture respective 50A, 50B, 60A, 60B, le passage de la position rétractée à la position déployée s'effectuant par un déplacement en translation selon une direction sensiblement parallèle au plan d'extension principal du couvercle 3, lequel est de préférence parallèle au fond 2A de la cuve 2.

Selon le mode de réalisation illustré aux figures, le moyen de verrouillage / déverrouillage 4 comprend avantageusement deux segments bifides 5, 6 positionnés l'un relativement à l'autre de manière diamétralement opposée par rapport à l'axe X-X', chaque segment bifide 5, 6 formant respectivement la première paire de pênes 5A, 5B et la seconde paire de pênes 6A, 6B. Par exemple, chaque segment bifide est formé d'une plaque métallique d'un seul tenant dont l'une des extrémités présente une forme de fourche, chaque dent de la fourche correspondant à un pêne 5A, 5B, 6A, 6B. Chaque segment 5, 6 est monté à translation radiale en considération de l'axe X-X'.

L'entraînement desdits segments 5, 6 est réalisé par tout moyen connu de l'homme du métier. Par exemple, dans l'exemple illustré aux figures, le moyen de verrouillage / déverrouillage 4 est commandé manuellement par l'utilisateur. A cette fin, l'autocuiseur 1 comprend de préférence un pommeau de commande 7A monté sur le couvercle 3 à rotation selon l'axe X-X'. Le pommeau 7A est relié mécaniquement aux segments 5, 6 pour que la rotation du pommeau 7A dans un sens engendre une rétractation radiale (centripète) des pênes 5A, 5B, 6A, 6B tandis que la rotation du pommeau 7A en sens contraire engendre à l'inverse un déplacement radial centrifuge des pênes 5A, 5B, 6A, 6B permettant d'engager ces derniers dans les ouvertures de verrouillage correspondantes 50A, 50B, 60A, 60B. L'entraînement des segments 5, 6 par le pommeau 7A peut être réalisé par tout moyen connu de l'homme du métier. Par exemple, le pommeau 7A peut être solidaire d'une plaque dans laquelle sont ménagées des lumières d'entraînement 70, les segments 5, 6 étant eux-mêmes pourvus de pions respectifs 51 engagés dans les lumières d'entraînement 70. Ainsi, la rotation du pommeau 7A entraîne la rotation concomitante des lumières d'entraînement 70 lesquelles, par un effet de rampe et en combinaison avec un guidage en translation des segments 5, 6, transforment leur mouvement de rotation en un mouvement de translation radiale desdits segments 5, 6.

Conformément à l'invention, l'autocuiseur 1 comprend en outre un écran 100 fixé sur la cuve 2 (et de préférence fixé sur la paroi latérale 2B de la cuve 2) pour masquer ladite au moins une ouverture de verrouillage 50A, 50B, 60A, 60B de façon que cette dernière ne soit sensiblement pas visible de l'extérieur de l'enceinte de cuisson.

En d'autres termes, l'écran 100 a pour fonction de cacher à la vue de l'utilisateur les ouvertures 50A, 50B, 60A, 60B lorsque l'autocuiseur 1 est fermé, c'est-à-dire lorsque le couvercle 3 est rapporté sur la cuve 2. De cette façon, la partie du système de verrouillage qui est susceptible d'être l'une des plus anxiogènes pour l'utilisateur, ainsi d'ailleurs que son principe de fonctionnement, sont invisibles pour l'utilisateur. Cela permet de diminuer le sentiment anxiogène que pourrait éprouver l'utilisateur lors de l'utilisation de l'autocuiseur 1. Cela permet également d'améliorer la fiabilité du verrouillage et la sécurité de l'utilisateur, en empêchant qu'un objet quelconque ne puisse être introduit intempestivement dans une ouverture de verrouillage, empêchant ainsi le bon fonctionnement de l'appareil.

De préférence, afin de dissimuler le reste du système de verrouillage /déverrouillage, l'autocuiseur 1 comprend un capot 400 rapporté et fixé sur le couvercle 3 pour masquer notamment les segments 5, 6 et leurs moyens d'entraînement (lumière 70, pion 51). La combinaison du capot 400, de l'écran 100, et d'un moyen de verrouillage / déverrouillage 4 basé sur une coopération pênes/ouvertures de verrouillage permet ainsi de rendre totalement invisible à l'utilisateur le système de verrouillage du couvercle, et ce de manière très simple, fiable et économique.

Avantageusement, l'autocuiseur 1 comprend au moins un organe de préhension 20 fixé sur la cuve 2, et de préférence fixé directement sur la paroi de la cuve 2. L'organe de préhension 20 est conçu pour permettre à l'utilisateur de manipuler non seulement la cuve 2 seule mais également et surtout l'autocuiseur 1 complet (formé de l'assemblage de la cuve 2 et du couvercle 3), en particulier lorsque ledit autocuiseur 1 est rempli d'aliments cuits ou à cuire, accompagnés éventuellement d'un liquide de cuisson. L'organe de préhension 20 est donc conçu pour permettre une prise manuelle aisée et ferme de l'autocuiseur 1, de manière à ce que l'utilisateur puisse déplacer manuellement et à volonté son autocuiseur 1 sans risque de voir ce dernier lui échapper. De préférence et comme illustré aux figures, l'organe de préhension 20 comprend au moins une poignée 21 fixée sur la paroi de la cuve 2, à l'extérieur de ladite cuve 2. Ladite poignée 21 s'étend de préférence sensiblement à partir et vers l'extérieur de la cuve 2, radialement par rapport à l'axe X-X'.

Dans l'exemple illustré aux figures, l'autocuiseur 1 comprend deux poignées 21, 22 disposées de manière diamétralement opposée l'une par rapport à l'autre en considération de l'axe X-X', lesdites poignées 21, 22 s'étendant radialement à partir de la paroi latérale 2B de la cuve 2, vers l'extérieur de cette dernière.

De manière particulièrement avantageuse, l'organe de préhension 20 est conformé et positionné sur la cuve 2 pour former ledit écran 100. En d'autres termes, dans ce mode de réalisation particulièrement préféré qui correspond à l'exemple illustré aux figures, l'organe de préhension 20 a une double fonction puisqu'il permet d'une part la manipulation de l'autocuiseur 1 et d'autre part le masquage des ouvertures de verrouillage 50A, 50B, 60A, 60B. Une telle double fonction est particulièrement intéressante du point de vue de la simplicité de fabrication industrielle et des coûts associés.

De préférence et comme illustré aux figures, les deux poignées 21, 22 sont identiques, et comprennent par exemple chacune une embase 210, 220 fixée directement à la paroi de cuve 2, contre la face externe 31 de cette dernière. A partir de chaque embase 210, 220 s'étend une anse respective 211, 221 destinée à être saisie manuellement par l'utilisateur.

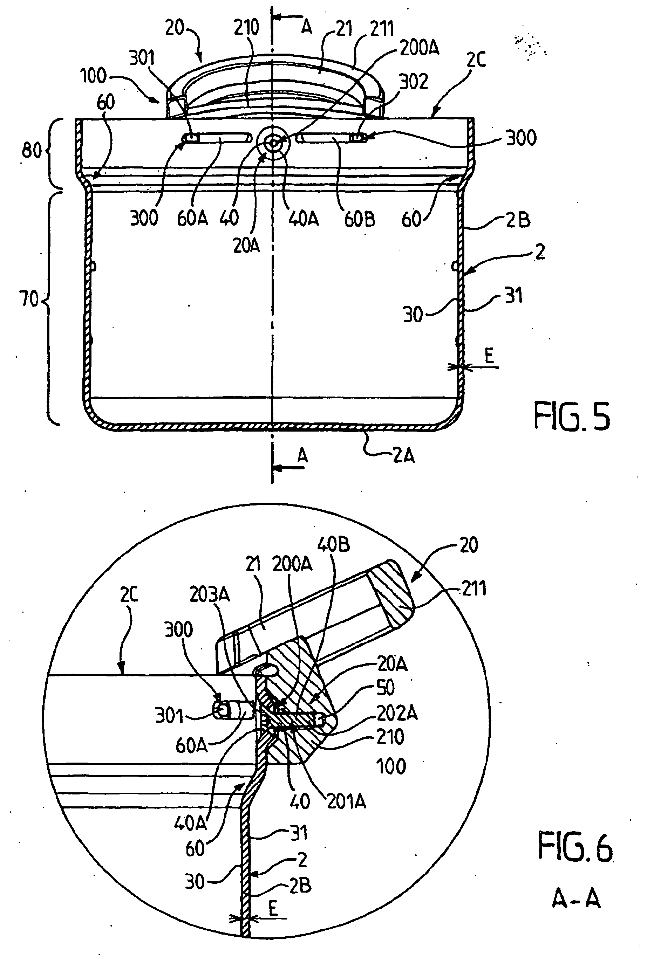

De préférence, afin d'assurer un verrouillage sûr, stable et fiable, une portion dudit pêne 5A, 5B, 6A, 6B fait saillie vers l'extérieur de la cuve 2 à travers l'ouverture de verrouillage correspondante 50A, 50B, 60A, 60B, c'est-à-dire que chaque pêne 5A, 5B, 6A, 6B traverse complètement l'ouverture respective 50A, 50B, 60A, 60B et ressort de l'autre côté de la cuve 2, comme illustré notamment aux figures 3 et 5.

Dans ce cas et comme illustré aux figures, il est avantageux que l'écran 100 soit pourvu d'au moins un logement interne borgne débouchant sur l'ouverture de verrouillage correspondante 50A, 50B, 60A, 60B pour accueillir en son sein ladite portion du pêne faisant saillie.

Ainsi, selon l'exemple de réalisation illustré aux figures, chaque embase 210, 220 présente avantageusement des cavités 210A, 210B, 220A, 220B formant logements internes borgnes, lesdites cavités étant destinées à être positionnées en regard des ouvertures 50A, 50B, 60A, 60B de manière à former un logement destiné à accueillir respectivement chaque pêne 5A, 5B, 6A, 6B lorsque ces derniers se trouvent en position déployée et font saillie de la paroi extérieure 31.

De préférence, l'organe de préhension 20 est fixé sur la cuve 2 à l'aide d'au moins un moyen d'attache 20A permettant d'établir une liaison mécanique, et de préférence une liaison mécanique d'encastrement, entre l'organe de préhension 20 et la cuve 2. De préférence, l'organe de préhension 20 est distinct et indépendant de la cuve 2, et est rapporté et fixé sur cette dernière, à l'aide du moyen d'attache 20A. Le moyen d'attache 20A permet donc d'assujettir, c'est-à-dire de fxer l'organe de préhension 20 directement sur la cuve 2.

Avantageusement, le moyen d'attache 20A comprend au moins un élément de fixation longiligne 201A s'étendant à partir de la paroi de la cuve 2 vers l'extérieur de la cuve 2. De préférence, le moyen d'attache 20A comprend en outre un orifice de fixation 200A traversant la paroi de la cuve 2, c'est-à-dire s'étendant à travers toute l'épaisseur E de ladite paroi de cuve 2. Dans ce cas, et tel que cela est illustré aux figures, l'élément de fixation 201A s'étend de préférence à travers ledit orifice de fixation 200A. L'élément de fixation 201A est ainsi enfilé dans l'orifice de fixation 200A, de façon à traverser la paroi de la cuve sur toute l'épaisseur E de cette dernière.

De préférence, l'élément de fixation 201A s'étend, au travers de l'orifice de fixation 200A, entre une extrémité externe 202A assujettie à l'organe de préhension 20 et une extrémité interne 203A pourvue d'une tête venant en appui contre la cuve 2, autour de l'orifice 200A, tel que cela est illustré aux figures.

Chaque poignée 21, 22 est de préférence fixée à la cuve 2 de la même façon, c'est-à-dire grâce à un moyen d'attache correspondant comprenant un orifice de fixation et un élément de fixation conformes à la description qui précède.

Avantageusement, l'élément de fixation 201A comprend au moins une vis 40 pourvue d'une tête 40A et d'une tige filetée 40B s'étendant à partir de ladite tête 40A à travers l'orifice de fixation 200A. L'organe de préhension 20 est quant à lui avantageusement pourvu d'un trou taraudé 50 dans lequel est vissée la tige filetée 40B, la tête 40A (dont le diamètre est supérieur à celui de la tige 40B) étant positionnée à l'intérieur de la cuve 2 et venant en appui contre cette dernière, c'est-à-dire contre la face interne 30 de la paroi latérale 2A.

De préférence, chaque poignée 21, 22 est ainsi fixée grâce à une vis vissée dans un trou taraudé ménagé au centre de l'embase 210, 220 de chaque poignée.

De préférence, le moyen d'attache 20A comprend au moins un élément de maintien 300 qui est solidaire de l'organe de préhension 20 et inséré dans l'ouverture de verrouillage 50A, 50B, 60A, 60B. Dans l'exemple illustré aux figures, l'élément de maintien 300 comprend des ergots 301, 302 s'étendant à partir de chaque poignée 21, 22. Par exemple, chaque poignée 21, 22 est pourvue de deux ergots respectifs 301, 302 qui viennent de matière avec la poignée correspondante et sont chacun introduits de manière ajustée dans une ouverture de verrouillage correspondante 50A, 50B, 60A, 60B. Ainsi, tel que cela est illustré à la figure 5, les deux ergots issus de la poignée 21 sont engagés respectivement dans les ouvertures de verrouillage 60A, 60B pour empêcher la rotation de la poignée 21 autour de l'axe de la vis 40. De préférence, les ouvertures de verrouillage 50A, 50B, 60A, 60B présentent une forme sensiblement oblongue et les ergots formant élément de maintien 300 sont introduits vers une extrémité de ces ouvertures.

Ainsi, chaque ouverture de verrouillage 50A, 50B, 60A, 60B assure une double fonction puisqu'elle permet d'une part un verrouillage du couvercle 3 sur la cuve 2 par coopération avec les pênes 5A, 5B, 6A, 6B et d'autre part elle assure un maintien en position des poignées 21, 22 par coopération avec des ergots (ou toute pièce équivalente) issus desdites poignées.

Il est cependant tout à fait envisageable, sans pour autant que l'on sorte du cadre de l'invention, de prévoir, en lieu et place d'ergots, la réalisation d'une déformation vers l'extérieur de la paroi 2B, de façon à créer un bossage, ce dernier étant destiné à coopérer avec une contre-forme ménagée dans la poignée pour maintenir cette dernière en position.

De préférence, l'élément de maintien 300 est uniquement prévu pour empêcher la rotation des poignées autour de l'axe de la vis de fixation 40A, laquelle assure l'essentiel de la fixation.

Il est cependant tout à fait envisageable de prévoir une fixation des poignées uniquement par coopération de pièces de fixation avec les ouvertures de verrouillage 50A, 50B, 60A, 60B, sans pour autant que l'on sorte du cadre de l'invention.

Il est également envisageable, sans pour autant que l'on sorte du cadre de l'invention, que les poignées 21, 22 soient, de manière classique, fixées sur un pontet métallique lui-même soudé sur la face extérieure de la paroi latérale 2B.

## Revendications

1. Autocuiseur domestique (1) comprenant au moins :
- une cuve (2) qui comprend elle-même une paroi,
- un couvercle (3) destiné à être rapporté sur la cuve pour former avec cette dernière une enceinte de cuisson,
- un moyen de verrouillage / déverrouillage (4) du couvercle (3) sur la cuve (2),
ledit autocuiseur (1) étant **caractérisé en ce que** le moyen de verrouillage / déverrouillage (4) comprend d'une part au moins une ouverture de verrouillage (50A, 50B, 60A, 60B) ménagée à travers la paroi de la cuve (2) et d'autre part un pêne (5A, 5B, 6A, 6B) monté mobile sur le couvercle (3) entre une position de verrouillage du couvercle (3) dans laquelle le pêne (5A, 5B, 6A, 6B) est engagé dans l'ouverture de verrouillage (50A, 50B, 60A, 60B) et une position de déverrouillage du couvercle (3) dans laquelle le pêne (5A, 5B, 6A, 6B) est dégagé de l'ouverture de verrouillage (50A, 50B, 60A, 60B), ledit autocuiseur (1) comprenant en outre un écran (100) fixé sur la cuve (2) pour masquer ladite ouverture de verrouillage (50A, 50B, 60A, 60B) de façon que cette dernière ne soit sensiblement pas visible de l'extérieur de l'enceinte de cuisson.

2. Autocuiseur (1) selon la revendication 1 **caractérisé en ce que** la paroi de la cuve (2) comprend elle-même un fond (2A) et une paroi latérale (2B) qui s'élève à partir et à la périphérie dudit fond (2A), ledit écran (100) étant fixé sur ladite paroi latérale (2B).

3. Autocuiseur (1) selon la revendication 1 ou 2 **caractérisé en ce qu'**il comprend un organe de préhension (20) fixé sur la cuve (2), ledit organe de préhension (20) étant conformé et positionné sur la cuve (2) pour former ledit écran (100).

4. Autocuiseur (1) selon la revendication 3 **caractérisé en ce que** l'organe de préhension (20) comprend une poignée (21, 22) fixée sur la paroi de la cuve (2) à l'extérieur de ladite cuve (2).

5. Autocuiseur (1) selon la revendication 3 ou 4 **caractérisé en ce que** l'organe de préhension (20) est fixé sur la cuve (2) à l'aide d'un moyen d'attache (20A) comprenant au moins un élément de maintien (300) qui est solidaire de l'organe de préhension (20) et inséré dans ladite ouverture de verrouillage (50A, 50B, 60A, 60B).

6. Autocuiseur (1) selon la revendication 5 **caractérisé en ce que** le moyen d'attache (20A) comprend un élément de fixation longiligne (201A) s'étendant à partir de la paroi de la cuve (2) vers l'extérieur de la cuve (2).

7. Autocuiseur (1) selon la revendication 6 **caractérisé en ce que** le moyen d'attache (20A) comprend un orifice de fixation (200A) traversant la paroi de la cuve (2), ledit élément de fixation (201A) s'étendant à travers l'orifice de fixation (200A).

8. Autocuiseur (1) selon l'une des revendications 1 à 7 **caractérisé en ce que** lorsque le pêne (5A, 5B, 6A, 6B) se trouve en position de verrouillage, une portion dudit pêne (5A, 5B, 6A, 6B) fait saillie vers l'extérieur de la cuve (2) à travers l'ouverture de verrouillage (50A, 50B, 60A, 60B), l'écran (100) étant pourvu d'au moins un logement interne borgne (210A, 210B, 220A, 220B) débouchant sur l'ouverture de verrouillage (50A, 50B, 60A, 60B) pour accueillir en son sein ladite portion du pêne (5A, 5B, 6A, 6B) faisant saillie.

## Claims

1. Domestic pressure cooker (1) at least comprising:
- a pan (2) which itself comprises a wall,
- a lid (3) designed to be added to the pan to form a cooking chamber with the latter,
- locking / release means (4) of the lid (3) from the pan (2),
wherein said pressure cooker (1) is **characterised in that** the locking / release means (4) comprise at least one locking opening (50A, 50B, 60A, 60B) fitted through the wall of the pan (2) and one pin (5A, 5B, 6A, 6B) with a mobile mounting on the lid (3) between a locked position of the lid (3) where the pin (5A, 5B, 6A, 6B) is engaged inside the locking opening (50A, 50B, 60A, 60B) and a released position of the lid (3) where the pin (5A, 5B, 6A, 6B) is clear of the locking opening (50A, 50B, 60A, 60B), wherein said pressure cooker (1) further comprises a screen (100) attached to the pan (2) to mask said locking opening (50A, 50B, 60A, 60B) so that the latter is substantially hidden from the outside of the cooking chamber.

2. Pressure cooker (1) according to claim 1 **characterised in that** the wall of the pan (2) itself comprises a base (2A) and a lateral wall (2B) which rises from and at the periphery of said base (2A), wherein said screen (100) is attached to said lateral wall (2B).

3. Pressure cooker (1) according to claim 1 or 2 **characterised in that** it comprises a gripping part (20) attached to the pan (2), wherein said gripping part (20) is conformed and positioned on the pan (2) to form said screen (100).

4. Pressure cooker (1) according to claim 3 **characterised in that** the gripping part (20) comprises a handle (21, 22) attached to the wall of the pan (2) on the outside of said pan (2).

5. Pressure cooker (1) according to claim 3 or 4 **characterised in that** the gripping part (20) is attached to the pan (2) by attachment means (20A) at least comprising one support element (300) that is attached to the gripping part (20) and inserted in said locking opening (50A, 50B, 60A, 60B).

6. Pressure cooker (1) according to claim 5 **characterised in that** the attachment means (20A) comprise an elongated attachment element (201A) extending from the wall of the pan (2) towards the outside of the pan (2).

7. Pressure cooker (1) according to claim 6 **characterised in that** the attachment means (20A) comprise an attachment orifice (200A) passing through the wall of the pan (2), wherein said attachment element (201A) extends through the attachment orifice (200A).

8. Pressure cooker (1) according to any of claims 1 to 7 **characterised in that** when the pin (5A, 5B, 6A, 6B) is in the locking position, a portion of said pin (5A, 5B, 6A, 6B) protrudes towards the outside of the pan (2) through the locking opening (50A, 50B, 60A, 60B), wherein the screen (100) is fitted with at least one blind inside recess (210A, 210B, 220A, 220B) opening onto the corresponding locking opening (50A, 50B, 60A, 60B) to accommodate said protruding portion of pin (5A, 5B, 6A, 6B) inside it.

## Patentansprüche

1. Haushalts-Schnellkochtopf (1), mindestens Folgendes aufweisend:
- einen Behälter (2), der selbst eine Wand aufweist,
- einen Deckel (3), der dazu bestimmt ist, auf den Behälter aufgesetzt zu werden, um mit diesem Letzteren einen Gareinschluss zu bilden,
- ein Verriegelungs-/Entriegelungsmittel (4) des Deckels (3) auf dem Behälter (2),
wobei der Schnellkochtopf (1) **dadurch gekennzeichnet ist, dass** das Verriegelungs-/Entriegelungsmittel (4) einerseits mindestens eine Verriegelungsöffnung (50A, 50B, 60A, 60B) aufweist, die durch die Wand des Behälters (2) eingerichtet ist, und andererseits einen Riegel (5A, 5B, 6A, 6B), der auf dem Deckel (3) zwischen einer Verriegelungsposition des Deckels (3), in der der Riegel (5A, 5E, 6A, 6B) in die Verriegelungsöffnung (50A, 50B, 60A, 60B) eingreift, und einer Entriegelungsposition des Deckels (3), in der der Riegel (5A, 5B, 6A, 6B) aus der Verriegelungsöffnung (50A, 50B, 60A, 60B) gelöst ist, beweglich montiert ist, wobei der Schnellkochtopf (1) ferner einen Abdeckschirm (100) aufweist, der auf dem Behälter (2) befestigt ist, um die Verriegelungsöffnung (50A, 50B, 60A, 60B) derart abzudecken, dass diese Letztere von außerhalb des Gareinschlusses her nicht sichtbar ist.

2. Schnellkochtopf (1) nach Anspruch 1, **dadurch gekennzeichnet, dass** die Wand des Behälters (2) selbst einen Boden (2A) und eine Seitenwand (2B) aufweist, die sich ausgehend und an dem Umfang des Bodens (2A) erhebt, wobei der Abdeckschirm (100) auf der Seitenwand (2B) befestigt ist.

3. Schnellkochtopf (1) nach Anspruch 1 oder 2, **dadurch gekennzeichnet, dass** er ein Greifelement (20) aufweist, das auf dem Behälter (2) befestigt ist, wobei das Greifelement (20) auf dem Behälter (2) ausgebildet und positioniert ist, um den Abdeckschirm (100) zu bilden.

4. Schnellkochtopf (1) nach Anspruch 3, **dadurch gekennzeichnet, dass** das Greifelement (20) einen Griff (21, 22) aufweist, der an der Wand des Behälters (2) an der Außenseite des Behälters (2) befestigt ist.

5. Schnellkochtopf (1) nach Anspruch 3 oder 4, **dadurch gekennzeichnet, dass** das Greifelement (20) auf dem Behälter (2) mit Hilfe eines Befestigungsmittels (20A) befestigt ist, das mindestens ein Halteelement (300) aufweist, das mit dem Greifelement (20) fest verbunden und in die Verriegelungsöffnung (50A, 50B, 60A, 60B) eingefügt ist.

6. Schnellkochtopf (1) nach Anspruch 5, **dadurch gekennzeichnet, dass** das Befestigungsmittel (20A) ein längliches Befestigungselement (201A) aufweist, das sich ausgehend von der Wand des Behälters (2) zur Außenseite des Behälters (2) erstreckt.

7. Schnellkochtopf (1) nach Anspruch 6, **dadurch gekennzeichnet, dass** das Befestigungsmittel (20A) eine Befestigungsöffnung (200A) aufweist, die die Wand des Behälters (2) durchdringt, wobei sich das Befestigungselement (201A) durch die Befestigungsöffnung (200A) erstreckt.

8. Schnellkochtopf (1) nach einem der Ansprüche 1 bis 7, **dadurch gekennzeichnet, dass** ein Teil des Riegels (5A, 5B, 6A, 6B), wenn sich der Riegel (5A, 5B, 6A, 6B) in Verriegelungsposition befindet, nach außerhalb des Behälters (2) durch die Verriegelungsöffnung (50A, 50B, 60A, 60B) vorsteht, wobei der Abdeckschirm (100) mit mindestens einer inneren Blindaufnahme (210A, 210B, 220A, 220B) versehen ist, die auf der Verriegelungsöffnung (50A, 50B, 60A, 60B) mündet, um in sich den vorstehenden Teil des Riegels (5A, 5B, 6A, 6B) aufzunehmen.
